# FASCICULE DE BREVET EUROPEEN

(11) **EP 2 765 544 B1**
(45) Date de publication et mention de la délivrance du brevet: **09.03.2022**
(21) Numéro de dépôt: 14290028.1
(22) Date de dépôt: 05.02.2014
(51) Int. Cl.: G06Q 50/26, G06Q 10/06

(54) **Procédé et dispositif d'optimisation d'un plan d'allocation de ressources**
Verfahren und Vorrichtung zum Optimieren eines Ressourcenallokationsplans
Method and device for optimizing a resource allocation plan

(30) Priorité: 08.02.2013 FR 1300286
(43) Date de publication de la demande: 13.08.2014
(73) Titulaire: MBDA France, 92350 Le Plessis-Robinson (FR)
(72) Inventeur: Leboucher, Cédric, 92170 Vanves (FR); Le Menec, Stéphane, 92190 Meudon (FR); Shin, S. Hyosang, Milton Keynes, MK88H N (GB); Kotenkoff, Alexandre, 92320 Chatillon (FR)
(74) Mandataire: Gevers & Orès

(56) Documents cités:
- Cédric Leboucher ET AL: "A Swarm Intelligence Method Applied to Resources Allocation Problem", ICSI, 14 juin 2011 (2011-06-14), XP055113124, Extrait de l'Internet: URL:http://icsi11.eisti.fr/papers/paper_31 .pdf [extrait le 2014-04-09]
- DEEPAK KHOSLA, TOM NICHOLS: "Hybrid evolutionary algorithms for network-centric command and control", SPIE, PO BOX 10 BELLINGHAM WA 98227-0010 USA, vol. 6249, 17 avril 2006 (2006-04-17), XP040225508,
- LING WU ET AL: "An anytime algorithm based on modified GA for dynamic weapon-target allocation problem", EVOLUTIONARY COMPUTATION, 2008. CEC 2008. (IEEE WORLD CONGRESS ON COMPUTATIONAL INTELLIGENCE). IEEE CONGRESS ON, IEEE, PISCATAWAY, NJ, USA, 1 juin 2008 (2008-06-01), pages 2020-2025, XP031325406, ISBN: 978-1-4244-1822-0
- XIN BIN ET AL: "An estimation of distribution algorithm with efficient constructive repair/improvement operator for the dynamic weapon-target assignment", CONTROL CONFERENCE (CCC), 2012 31ST CHINESE, IEEE, 25 juillet 2012 (2012-07-25), pages 2346-2351, XP032288761, ISBN: 978-1-4673-2581-3
- None
- QUAN A ET AL: "Automated threat response using intelligent agents (ATRIA)", AEROSPACE CONFERENCE, 2001, IEEE PROCEEDINGS. MAR. 10-17, 2001`, PISCATAWAY, NJ, USA,IEEE, PISCATAWAY, NJ, USA, vol. 6, 20 March 2001 (2001-03-20), pages 2721-2730, XP010548395, ISBN: 978-0-7803-6599-5

## Description

La présente invention concerne un dispositif et un procédé d'optimisation d'un plan d'allocation de ressources.

Dans le cadre de la présente invention, on entend par allocation de ressources, le fait d'associer des ressources à des objectifs, par exemple des armes à des cibles à atteindre dans le domaine militaire.

Plus précisément, la présente invention peut s'appliquer à toute situation d'allocation de ressources ou de tâches pouvant être modélisée par des fenêtres de disponibilité et d'efficacité, c'est-à-dire par des fenêtres dépendant du temps pour lesquelles la ressource correspondante peut être utilisée (c'est-à-dire est disponible) et dont la valeur illustre l'efficacité de cette ressource pour atteindre son objectif, par exemple l'efficacité d'une arme telle qu'un missile pour détruire une cible.

De nombreuses applications sont possibles dans le domaine de la planification de mission et/ou du contrôle de mission, et ceci notamment dans les secteurs suivants : aéronautique civile ou militaire (préparation de mission pour des systèmes d'armes), systèmes autonomes civils ou militaires (drones), transport aérien (gestion des aéroports), domaine de la logistique au sens large, domaine des transports (transport ferroviaire, gestion du trafic, fret).

Bien que pouvant ainsi être utilisée dans de nombreux domaines, la présente invention s'applique au domaine militaire, et plus précisément au cas des systèmes de commande et de contrôle (« Command & Control (C2) » en anglais) qui gèrent notamment une allocation d'armes à des cibles (« Weapon Target Assignment » en anglais). Dans un contexte militaire, la défense d'une zone face à une offensive ennemie requiert un minutieux prétraitement afin d'allouer au mieux les ressources disponibles pour traiter les menaces en maximisant l'espérance de survie des points stratégiques défendus.

En fonction des menaces, le système de commande et de contrôle détermine une solution d'engagement en tenant compte de critères opérationnels et techniques.

La détermination d'une solution d'engagement repose non seulement sur l'allocation des armes disponibles aux cibles, mais également sur le choix de la date de tir. Cette dernière peut se révéler très compliquée face aux nombreuses contraintes et incertitudes qui existent dans un tel système complexe.

La modélisation d'un tel scénario pose donc un vrai problème que les industriels de l'armement rencontrent dans l'élaboration de solutions répondant à cette difficulté. Il faut, en effet, être capable de trouver une solution basée sur un horizon temporel, mais également être capable de modéliser les zones d'incertitude lorsque la menace est à portée. Un opérateur devra valider un engagement en se basant sur la pertinence des dates de tir proposées, tout en tenant compte de la pertinence des probabilités de réussite associées. La solution d'engagement devra être faisable et optimale en termes de probabilité de succès.

Une première approche usuelle prévoit de modéliser la situation comme une succession de problèmes d'allocation d'armes à des cibles en version statique. A chaque menace est attribué un degré de dangerosité, et à chacune des armes est attribuée une probabilité de succès contre cette menace. Le problème est rendu dynamique en prenant en compte un scénario étape par étape, et en observant les issues de chacun des combats résultant de l'allocation faite à l'étape précédente. Le document "Automated threat response using intelligent agents (ATRIA)" de Quan A. et al. (aerospace conférence 2001, ISBN 978-0-7803-6599-5) en est un exemple.

Une autre approche usuelle prévoit d'utiliser un espace de temps discret et d'y associer une probabilité de succès. Cette approche permet de planifier une solution d'engagement avec un horizon temporel qui est découpé en parties.

Toutefois, aucune de ces solutions n'est satisfaisante pour les applications envisagées. En effet :
- la modélisation du problème dynamique en succession de problèmes statiques n'est pas toujours en mesure de résoudre le problème réel dans la mesure où elle ne tient pas compte de la continuité du temps et des possibilités de prévision à long terme d'une solution d'engagement. Le problème étant ramené à une succession de problèmes statiques, la notion de prévision est absorbée. La planification à long terme n'est pas possible. Cette méthode ne permet pas le séquençage des tirs afin d'optimiser de manière globale le problème ; et
- la modélisation probabiliste en temps discret ne permet pas de gérer les frontières de la segmentation de temps de manière fiable. En effet, une telle modélisation suppose qu'entre deux instants de temps très proches, la probabilité de succès peut passer de 0 à une valeur importante. Ceci représente un défaut majeur de modélisation : par exemple pour l'application précitée dans le domaine militaire sur des portées de plusieurs kilomètres quelques mètres sont négligeables et ne devraient pas conduire à une différence aussi importante.

Par conséquent, il n'existe pas de dispositif ou de moyens techniques permettant de déterminer et optimiser un plan d'allocation de ressources.

La présente invention comprend un dispositif d'optimisation d'un plan d'allocation de ressources, qui permet de remédier aux inconvénients précités. Ce dispositif fait partie d'un système de traitement de menaces dans le domaine militaire, tel que précisé ci-dessous.

Selon l'invention, ledit dispositif du type comprenant :
- des moyens d'entrée de données ;
- des premiers moyens pour déterminer, à partir des données entrées, des fenêtres temporelles de disponibilité et d'efficacité, relatives auxdites ressources ;
- des deuxièmes moyens pour déterminer, à l'aide de ces fenêtres temporelles, un plan d'allocation optimal des ressources ; et
- des moyens utilisateurs utilisant un plan d'allocation optimal, déterminé par les deuxièmes moyens,
est remarquable en ce que lesdits deuxièmes moyens comprennent :
- un premier élément configuré pour probabiliser un espace de solutions, à savoir lesdites fenêtres temporelles, en générant des fonctions continues en fonction du temps respectant les fenêtres temporelles ; et
- un deuxième élément configuré pour optimiser le plan d'allocation à partir de l'espace de solutions ainsi probabilisé.

Ainsi, grâce à l'invention, on obtient un dispositif permettant de déterminer et optimiser un plan d'allocation de ressources.

Le dispositif conforme à la présente invention comprend ainsi, comme précisé ci-dessous, des moyens techniques pour générer des données, des moyens techniques pour traiter automatiquement des données (afin de déterminer un plan d'allocation optimal) et des moyens techniques pour utiliser les résultats du traitement.

On entend par « probabiliser » le fait d'affecter des probabilités aux éléments de l'ensemble considéré. De façon usuelle, la probabilité est une évaluation du caractère probable d'un événement ; plus ce nombre est grand, plus la chance que l'événement se produise est élevée.

En outre, avantageusement :
- les moyens d'entrée de données comportent des moyens (par exemple un radar) qui permettent de fournir automatiquement des données et/ ou des moyens permettant à un opérateur d'entrer des données ; et/ou
- les moyens utilisateurs comportent des moyens d'affichage qui affichent le plan d'allocation optimal sur un écran ; et/ou
- les moyens d'affichage et les moyens permettant à un opérateur d'entrer des données font partie d'une interface homme/machine ; et/ou
- le premier élément est configuré pour mettre en œuvre une interpolation à partir de points de performance de manière à obtenir une modélisation probabilisée et continue de l'espace de solutions ; et/ou
- le deuxième élément est configuré pour réaliser une optimisation par essaim particulaire.

Le dispositif conforme à l'invention peut utiliser toute modélisation mathématique usuelle de type probabiliste des fenêtres temporelles de disponibilité et d'efficacité.

Le dispositif conforme à l'invention permet ainsi de répondre au problème de modélisation de manière simple tout en incluant une meilleure fiabilité dans la représentation mathématique. La planification avec horizon temporel et les zones de transition sont représentées de manière précise. L'utilisation de lois de probabilité permet de quantifier au sein d'un système opérationnel la disponibilité et l'efficacité de chaque ressource, et ainsi d'optimiser globalement la mission au cours du temps, en maximisant la probabilité de réussite de la mission.

Pour ce faire, on définit donc une fenêtre de disponibilité des ressources (par exemple des armes) à laquelle on associe une probabilité de succès qui se modélise par les lois fondamentales de probabilité.

Le dispositif conforme à l'invention permet ainsi notamment de résoudre les deux problèmes suivants :
- l'incertitude aux bornes tout en utilisant les propriétés mathématiques d'une modélisation par loi normale ; et
- la proposition d'une solution avec horizon temporel.

Par ailleurs, en plus de représenter plus fidèlement les zones de transition, la présente invention permet d'obtenir un espace des solutions plus précis et continu qu'une solution usuelle basée sur un espace discret.

La présente invention concerne un système de traitement de menaces aériennes dans le domaine militaire, notamment de type commande e1 contrôle (C2), comprenant un dispositif d'optimisation tel que précité, ledit système comprenant une allocation de missiles pour traiter les menaces, aériennes et comportant :
- une première unité pour récupérer des informations sur la situation aérienne de l'environnement d'une zone à protéger par ledit système, ladite première unité détectant des menaces et transmettant des informations de position et de cinématique des menaces ;
- une deuxième unité, comprenant le dispositif d'optimisation précité, pour traiter ces informations afin d'en déduire une proposition d'engagement, en déterminant tout d'abord des fenêtres de tirs à partir desdites informations, puis en déduisant la proposition d'engagement à partir de ces fenêtres de tirs ; et
- une troisième unité pour mettre en oeuvre une étape d'approbation de la proposition d'engagement, l'engagement étant réalisé conformément à une proposition d'engagement approuvée par ladite troisième unité.

En outre, avantageusement :
- la première unité comporte au moins un radar qui transmet audit dispositif des informations sur la situation aérienne de l'environnement d'une zone à protéger par le système ; et/ou
- le système comporte, de plus, une interface homme/machine permettant à un opérateur de réaliser une approbation ; et/ou
- le système comporte, de plus, des moyens d'affichage qui affichent la proposition d'engagement approuvée par ladite troisième unité.

La présente invention concerne, en outre, un procédé d'optimisation automatique d'un plan d'allocation de missiles faisant partie d'une méthode de traitement de menaces aériennes dans le domaine militaire, telle que précisée ci-dessous.

Selon l'invention, ledit procédé d'optimisation selon lequel, de façon automatique, on met en œuvre les étapes suivantes :
A/ on génère des données et on détermine, à partir de données générées, des fenêtres temporelles de disponibilité et d'efficacité, relatives auxdites ressources ; et
B/ à l'aide de ces fenêtres temporelles, on détermine un plan d'allocation optimale des ressources, que l'on utilise ensuite,
est remarquable en ce qu'à l'étape B/, on met en œuvre les opérations successives suivantes :
a) on probabilise l'espace des solutions, à savoir lesdites fenêtres temporelles, en générant des fonctions continues en fonction du temps, qui respectent lesdites fenêtres temporelles ; et
b) on optimise le plan d'allocation à partir de l'espace des solutions ainsi probabilisé.

Le procédé conforme à l'invention prévoit donc une modélisation probabiliste temporelle afin d'évaluer le plan dans son ensemble, en considérant les contraintes réelles, mais également les espaces flous, c'est-à-dire la zone de temps où la menace devient à portée.

Avantageusement, à l'étape B/a), on met en œuvre une interpolation à partir de points de performance de manière à obtenir une modélisation probabilisée et continue de l'espace de solutions.

En outre, de façon avantageuse, à l'étape B/b), on réalise une optimisation par essaim particulaire. D'autres méthodes d'optimisation usuelles (algorithmes génétiques, algorithmes gloutons,...) sont également possibles.

La présente invention concerne ainsi également une méthode de traitement de menaces aériennes dans le domaine militaire, comprenant une allocatior d'armes pour traiter les menaces.

Cette méthode, selon laquelle on met en œuvre les étapes successives suivantes :
α) on récupère des informations sur la situation aérienne de l'environnement d'une zone à protéger, en détectant des menaces et en transmettant des informations de position et de cinématique des menaces ;
β) on traite ces informations pour en déduire une proposition d'engagement, en déterminant tout d'abord des fenêtres de tirs à partir desdites informations, puis en déduisant la proposition d'engagement à partir de ces fenêtres de tirs, ladite proposition d'engagement précisant l'allocation des armes et les instants de tir de ces armes pour traiter les menaces ; et
γ) on prévoit une étape d'approbation de la proposition de l'engagement, l'engagement étant réalisé conformément à une proposition d'engagement approuvée à cette étape γ),
est remarquable, selon l'invention, en ce qu'à l'étape β), on détermine la proposition d'engagement en mettant en œuvre le procédé d'optimisation précité.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 est un graphique permettant d'expliquer des caractéristiques du procédé mis en œuvre par le dispositif conforme à l'invention.

La figure 3 est le schéma synoptique d'un système de traitement de menaces, utilisant un dispositif conforme à l'invention.

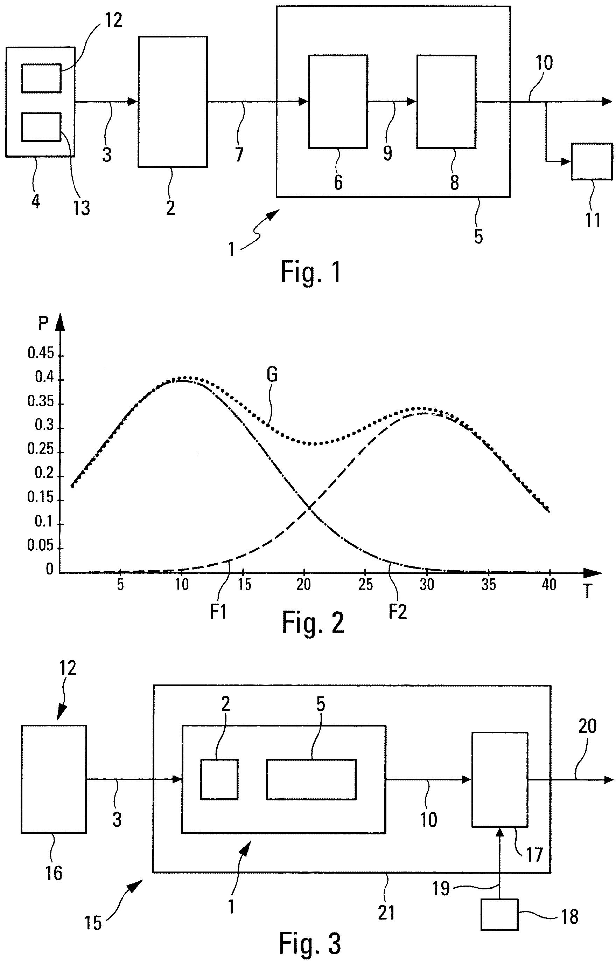

Le dispositif 1 conforme à l'invention et représenté schématiquement sur la figure 1 est destiné à réaliser une optimisation automatique d'un plan d'allocation de ressources, c'est-à-dire à déterminer un plan qui optimise au mieux l'allocation des différentes ressources considérées à des objectifs particuliers, par exemple des armes pour traiter des menaces.

Pour ce faire, ledit dispositif d'optimisation 1 est du type comprenant :
- des moyens 4 d'entrée de données ;
- des moyens 2 pour déterminer, à partir d'informations et de données reçues, des fenêtres temporelles de disponibilité et d'efficacité, notamment des fenêtres de tirs d'armes, relatives aux ressources considérées. Ces informations et données sont reçues des moyens 4 d'entrée de données par l'intermédiaire d'une liaison 3 ;
- des moyens 5 qui sont reliés par l'intermédiaire d'une liaison 7 auxdits moyens 2 et qui est formés de manière à déterminer, à l'aide de ces fenêtres temporelles, un plan d'allocation optimal des ressources ; et
- des moyens utilisateurs 11 qui utilisent le plan d'allocation optimal, déterminé par les moyens 5.

Dans le cadre de la présente invention, les moyens d'entrée de données 4 peuvent comporter :
- des moyens 12 (des dispositifs ou des systèmes tels qu'un radar par exemple) qui permettent de fournir automatiquement des données ; et/ou
- des moyens 13 permettant à un opérateur d'entrer des données notamment manuellement. Ces moyens 13 peuvent comporter un clavier, une souris, un pavé tactile,..., ou tout autre moyen usuel, associé par exemple à un écran, qui permet à un opérateur d'entrer des données dans ledit dispositif 1

Selon l'invention, lesdits moyens 5 comprennent, comme représenté sur la figure 1 :
- un élément 6 qui est relié par l'intermédiaire de la liaison 7 auxdits moyens 2 et qui est formé de manière à probabiliser un espace de solutions, à savoir lesdites fenêtres temporelles, en générant des fonctions continues en fonction du temps, qui respectent lesdites fenêtres temporelles ; et
- un élément 8 qui est relié par l'intermédiaire d'une liaison 9 à l'élément 6 et qui est formé de manière à optimiser le plan d'allocation à partir de l'espace de solutions ainsi probabilisé.

L'élément 8 transmet ensuite le plan d'allocation optimal par l'intermédiaire d'une liaison 10 aux moyens utilisateurs 11. Les moyens utilisateurs 11 sont des moyens qui utilisent le plan d'allocation optimal, déterminé par les moyens 5. Ces moyens utilisateurs 11 comprennent par exemple une unité d'affichage (qui affiche ce plan d'allocation optimal sur un écran) ou des moyens d'impression (qui impriment le plan d'allocation optimal). Les moyens 11 peuvent former avec les moyens 13 une interface homme/machine.

Dans un mode de réalisation particulier, l'élément 6 met en œuvre une interpolation à partir de points de performance de manière à obtenir une modélisation probabilisée et continue de l'espace de solutions (des fenêtres temporelles de disponibilité et d'efficacité). Une interpolation de ce type peut être mise en œuvre de manière précise et efficace en utilisant par exemple une interpolation usuelle en Splines de Bézier.

La modélisation mise en œuvre par le dispositif 1 est basée sur des lois de probabilité usuelles (Gaussienne, Poisson,...). Cette solution permet :
- de définir la probabilité de succès en fonction du temps ; et
- d'anticiper à long terme le plan d'allocations.

On notera qu'un avantage des espaces probabilisés est qu'il existe une théorie mathématique importante sur la combinaison des évènements (indépendants ou non) rendant cette approche encore plus fiable.

A titre d'illustration, on a représenté sur la figure 2 (qui illustre une probabilité P en fonction du temps T), une courbe de probabilité G qui est une courbe de disponibilité et d'efficacité et qui est modélisée comme une somme de deux gaussiennes F1 et F2.

En outre, dans un mode de réalisation particulier, l'élément 8 utilise une méthode d'optimisation basée sur le principe de l'optimisation par essaim particulaire, tel que défini par exemple dans un article de Leboucher, Chelouah, Siarry et Le Ménec, intitulé "A Swarm Intelligence Method Combined to Evolutionary Game Theory Applied to the Resources Allocation Problem" et publié dans « International Journal of Swarm Intelligence Research » (IJSIR), vol.3, p.20-38, 2012.

Ledit dispositif 1 conforme à la présente invention peut être appliqué dans de nombreux domaines.

Dans une application préférée, ledit dispositif 1 fait partie d'un système 15 de traitement de menaces dans le domaine militaire, notamment de type commande et contrôle, comprenant une allocation d'armes en particulier des missiles pour traiter des menaces (généralement aériennes).

Ce système 15 comporte, comme représenté sur la figure 3 :
- des moyens 12 qui comprennent au moins un radar 16 qui transmet au dispositif 1 via la liaison 3 des informations sur la situation aérienne de l'environnement de la zone à protéger par le système 15. Ces moyens 12 peuvent déjà faire partie (au moins en partie) du dispositif 1 ou être dédiés au système 15. Le radar 16 détecte des menaces et transmet les informations correspondantes, notamment la position et la cinématique des menaces ;
- ledit dispositif 1 qui traite ces informations pour en déduire une proposition d'engagement, en déterminant tout d'abord à l'aide des moyens 2 des fenêtres de tirs à partir desdites informations préalablement formatées, puis en déduisant à l'aide des moyens 5 la proposition d'engagement à partir de ces fenêtres de tirs. Cette proposition d'engagement est un plan d'allocation optimal qui précise une allocation des armes et prévoit des instants ou dates de tir pour traiter les menaces ; et
- des moyens 17 pour mettre en œuvre une étape d'approbation de la proposition de l'engagement, reçue du dispositif 1 par la liaison 10. L'approbation est faite par un opérateur à l'aide de moyens 18 (faisant par exemple partie de l'interface homme/machine précitée) qui sont reliés par l'intermédiaire d'une liaison 19 auxdits moyens 17.

Ensuite, l'engagement est réalisé conformément à la proposition d'engagement approuvée par lesdits moyens 17 et transmise par une liaison 20, par exemple à des moyens d'affichage (non représentés). Les moyens 17 et le dispositif 1 (notamment ses moyens 2, 6 et 8) font par exemple partie d'une unité 21 de traitement d'informations.

On décrit plus en détail, ci-après, les traitements mis en œuvre par les différents moyens du dispositif 1.

A partir des informations fournies par le radar 16, un posttraitement des informations est réalisé par le dispositif 1 afin de pouvoir utiliser ces informations. Ce traitement se décompose en deux sous tâches : le calcul de la capacité d'atteinte des missiles sur la menace considérée, et l'optimisation du séquencement des tirs afin d'optimiser le traitement de l'ensemble des menaces.

Le calcul de la capacité d'atteinte, mis en œuvre de façon usuelle par les moyens 2, consiste à convertir les informations fournies par le radar 16 et formatées en fenêtres de tirs pour le calcul de la meilleure séquence de tir au niveau du plan d'engagement. Pour ce faire, les moyens 2 calculent, par exemple, l'intersection entre une trajectoire et un volume dont les entrées sont la cinématique de la menace et les performances des armes. Les moyens 2 fournissent des fenêtres de tirs temporelles pouvant éventuellement être divisées en plusieurs parties.

Les moyens 5 déterminent ensuite le plan d'engagement en fonction de ces fenêtres de tir.

Les moyens 5 utilisent donc en entrée les fenêtres de tirs, et après détermination de la solution optimale, ils fournissent un ensemble de solutions du type : {Missile ; Menace ; Date de Tir}.

A cet effet, l'élément 6, des moyens 5 probabilise tout d'abord l'espace des solutions, à savoir lesdites fenêtres de tirs, en générant des fonctions continues modélisant lesdites fenêtres de tirs.

Comme indiqué ci-dessus, l'espace des solutions peut être probabilisé en utilisant un système simple d'interpolation à partir de points de performance. Une interpolation de ce type peut être mise en œuvre de manière précise et efficace en utilisant par exemple une interpolation en Splines de Bézier. On obtient donc une modélisation probabilisée et continue de l'espace des solutions à partir de points de performances réels, c'est-à-dire la probabilité de réussite d'un tir en fonction de l'instant (ou date) de tir.

La solution doit prendre en compte trois points majeurs : l'association de missiles pour traiter une unique menace, la possibilité de planifier l'intervention avec un horizon temporel, et la définition d'un critère qui est une métrique commune, par exemple basé sur la capacité du système à faire face à tout type de scénario. Le dispositif 1 conforme à l'invention permet de prendre en compte ces différents aspects.

Une approche probabilisée basée sur une succession d'événements temporels que l'on peut considérer comme indépendants ou non, se modélise de manière connue. Ainsi, la combinaison des missiles pour intercepter une unique menace peut se quantifier de manière très précise. L'approche prise en compte par le dispositif 1 qui se base sur la prévision avec horizon temporel permet d'examiner toutes les combinaisons possibles en termes de missiles utilisés et de temps. Ainsi, on ne cherche plus à optimiser seulement un couple {Missile 1 - Missile 2}, mais un triplet {Missile 1 - Missile 2 - Date d'interception}.

Comme indiqué ci-dessus, la planification avec horizon temporel est indispensable pour réussir avec succès une mission. Le choix d'une fonction continue par rapport au temps pour la modélisation permet d'améliorer considérablement la précision du modèle utilisé.

Concernant l'optimisation mise en oeuvre par l'élément 8, comme tout problème d'optimisation, la définition d'une mesure permettant de comparer les solutions entre elles est indispensable. L'approche proposée se base donc sur les probabilités. Il convient donc de définir la qualité d'une solution par une probabilité. En effet, le modèle proposé se base sur une succession d'événements indépendants ou non, et dont les règles d'association sont mathématiquement connues. Le critère général d'évaluation d'une solution peut ainsi se baser sur la probabilité totale que toutes les menaces soient traitées, ou encore sur la survie de la zone défendue. Une combinaison des deux approches est également possible.

La présente invention permet de résoudre les deux problèmes suivants :
- la modélisation des incertitudes liées au contexte et la probabilité de prévoir mieux et à long terme un engagement en tenant compte d'une situation qui évolue de manière continue en fonction du temps ; et
- la résolution des problèmes aux frontières des domaines de la capacité d'atteinte pour plus de réalisme dans la modélisation.

On a décrit ci-dessus le dispositif 1 dans une application à un système 15 de type C2. Toutefois, de nombreuses autres applications sont possibles dans le domaine de la planification de mission et/ou du contrôle de mission, et ceci notamment dans les secteurs suivants : aéronautique civile ou militaire (préparation de mission pour des systèmes d'armes), systèmes autonomes civils ou militaires (drones), transport aérien (gestion des aéroports), domaine de la logistique au sens large, domaine des transports (transport ferroviaire, gestion du trafic, fret).

## Revendications

1. Système de traitement de menaces aériennes dans le domaine militaire, comprenant une allocation de missiles pour traiter les menaces aériennes, ledit système (15) comportant :
- une première unité (12) pour récupérer des informations sur la situation aérienne de l'environnement d'une zone à protéger par ledit système (15), ladite première unité (12) détectant des menaces aériennes et transmettant des informations de position et de cinématique des menaces aériennes ;
- une deuxième unité (1) pour traiter ces informations pour en déduire une proposition d'engagement, en déterminant tout d'abord des fenêtres de tirs des missiles à partir desdites informations, puis en déduisant la proposition d'engagement à partir de ces fenêtres de tirs, ladite proposition d'engagement étant un plan d'allocation optimal des missiles, ladite proposition d'engagement précisant l'allocation des missiles et les instants de tir des missiles pour traiter les menaces aériennes ; et
- une troisième unité (17) pour mettre en œuvre une étape d'approbation de la proposition d'engagement, l'engagement étant réalisé conformément à une proposition d'engagement approuvée par ladite troisième unité (17),
ladite deuxième unité (1) comprenant un dispositif automatique d'optimisation d'un plan d'allocation de missiles comportant :
• des moyens (4) d'entrée de données ;
• des premiers moyens (2) pour déterminer, à partir des données entrées, des fenêtres temporelles de disponibilité et d'efficacité, relatives auxdits missiles ;
• des deuxièmes moyens (5) pour déterminer, à l'aide de ces fenêtres temporelles, le plan d'allocation optimal des missiles ; et
• des moyens utilisateurs (11) utilisant le plan d'allocation optimal, déterminé par les deuxièmes moyens (5),
lesdits deuxièmes moyens (5) comprenant :
- un premier élément (6) configuré pour probabiliser un espace de solutions, à savoir lesdites fenêtres temporelles, en générant des fonctions continues en fonction du temps respectant les fenêtres temporelles ; et
- un deuxième élément (8) configuré pour optimiser le plan d'allocation à partir de l'espace de solutions ainsi probabilisé.

2. Système selon la revendication 1,
**caractérisé en ce que** les moyens (4) d'entrée de données comportent des moyens (12) qui permettent de fournir automatiquement des données.

3. Système selon l'une des revendications 1 et 2,
**caractérisé en ce que** les moyens (4) d'entrée de données comportent des moyens (13) permettant à un opérateur d'entrer des données.

4. Système selon l'une des revendications 1 à 3,
**caractérisé en ce que** les moyens utilisateurs (11) comportent des moyens d'affichage qui affichent le plan d'allocation optimal sur un écran.

5. Système selon les revendications 3 et 4,
**caractérisé en ce que** les moyens d'affichage et les moyens (13) permettant à un opérateur d'entrer des données font partie d'une interface homme/machine.

6. Système selon l'une quelconque des revendications précédentes, **caractérisé en ce que** le premier élément (6) est configuré pour mettre en œuvre une interpolation à partir de points de performance de manière à obtenir une modélisation probabilisée et continue de l'espace de solutions.

7. Système selon l'une quelconque des revendications précédentes, **caractérisé en ce que** le deuxième élément (8) est configuré pour réaliser une optimisation par essaim particulaire.

8. Système selon l'une quelconque des revendications précédentes, **caractérisé en ce que** la première unité (12) comporte au moins un radar (16) qui transmet audit dispositif (1) des informations sur la situation aérienne de l'environnement d'une zone à protéger par le système (15).

9. Système selon l'une quelconque des revendications précédentes, **caractérisé en ce qu'**il comporte, de plus, une interface homme/machine permettant à un opérateur de réaliser une approbation.

10. Système selon l'une quelconque des revendications précédentes, **caractérisé en ce qu'**il comporte, de plus, des moyens d'affichage qui affichent la proposition d'engagement approuvée par ladite troisième unité (17).

11. Méthode de traitement de menaces aériennes dans le domaine militaire, comprenant une allocation de missiles pour traiter les menaces aériennes, ladite méthode mettant en œuvre les étapes successives suivantes :
α) on récupère des informations sur la situation aérienne de l'environnement d'une zone à protéger, en détectant des menaces aériennes et en transmettant des informations de position et de cinématique des menaces aériennes ;
β) on traite ces informations pour en déduire une proposition d'engagement, en déterminant tout d'abord des fenêtres de tirs des missiles à partir desdites informations, puis en déduisant la proposition d'engagement à partir de ces fenêtres de tirs, ladite proposition d'engagement étant un plan d'allocation optimal des missiles, ladite proposition d'engagement précisant l'allocation des missiles et les instants de tir des missiles pour traiter les menaces aériennes ; et
γ) on prévoit une étape d'approbation de la proposition de l'engagement, l'engagement étant réalisé conformément à une proposition d'engagement approuvée à cette étape γ),
la proposition d'engagement étant déterminée à l'étape β) en mettant en œuvre un procédé d'optimisation d'un plan d'allocation de missiles, selon lequel, de façon automatique, on met en œuvre les étapes suivantes :
A/ on génère des données et on détermine, à partir de données générées, des fenêtres temporelles de disponibilité et d'efficacité, relatives auxdites ressources ; et
B/ à l'aide de ces fenêtres temporelles, on détermine le plan d'allocation optimale des ressources,
les opérations successives suivantes étant mises en œuvre à l'étape B/ :
a) on probabilise un espace des solutions, à savoir lesdites fenêtres temporelles, en générant des fonctions continues en fonction du temps, qui respectent lesdites fenêtres temporelles ; et
b) on optimise le plan d'allocation à partir de l'espace des solutions ainsi probabilisé.

## Patentansprüche

1. Verarbeitungssystem für Bedrohungen aus der Luft im Militärbereich, das eine Zuordnung von Flugkörpern zur Behandlung der Bedrohungen aus der Luft umfasst, wobei das System (15) umfasst:
- eine erste Einheit (12) zum Gewinnen der Informationen über die Luftlage der Umgebung einer von dem System (15) zu schützenden Zone, wobei die erste Einheit (12) Bedrohungen aus der Luft erfasst und Positions- und Kinematikinformationen der Bedrohungen aus der Luft überträgt;
- eine zweite Einheit (1) zum Verarbeiten dieser Informationen, um daraus einen Einsatzvorschlag abzuleiten, indem zunächst Abschussfenster der Flugkörper ausgehend von den Informationen bestimmt werden, dann, unter Ableiten des Einsatzvorschlags ausgehend von diesen Abschussfenstern, wobei der Einsatzvorschlag ein optimaler Zuordnungsplan der Flugkörper ist, wobei der Einsatzvorschlag die Zuordnung der Flugkörper und die Abschusszeitpunkte der Flugkörper präzisiert, um die Bedrohungen aus der Luft zu verarbeiten; und
- eine dritte Einheit (17) zum Umsetzen eines Genehmigungsschritts des Einsatzvorschlags, wobei der Einsatz gemäß einem Einsatzvorschlag, der von der dritten Einheit (17) genehmigt wird, ausgeführt wird,
wobei die zweite Einheit (1) eine automatische Optimierungsvorrichtung eines Zuordnungsplans von Flugkörpern umfasst, die umfasst:
- Mittel (4) zur Eingabe von Daten;
- erste Mittel (2), um ausgehend von den eingegebenen Daten Verfügbarkeits- und Effizienzzeitfenster im Zusammenhang mit den Flugkörpern zu bestimmen;
- zweite Mittel (5), um mit Hilfe dieser Zeitfenster den optimalen Zuordnungsplan der Flugkörper zu bestimmen; und
- Benutzermittel (11), die den optimalen Zuordnungsplan, der von den zweiten Mitteln (5) bestimmt wird, verwenden,
wobei die zweiten Mittel (5) umfassen:
- ein erstes Element (6), das dazu ausgelegt ist, einen Raum von Lösungen zu probabilisieren, nämlich die Zeitfenster, indem kontinuierliche Funktionen in Abhängigkeit von der Zeit, die die Zeitfenster einhalten, erzeugt werden; und
- ein zweites Element (8), das dazu ausgelegt ist, den Zuordnungsplan ausgehend von dem Raum von Lösungen, der derart probabilisiert wird, zu optimieren.

2. System nach Anspruch 1,
**dadurch gekennzeichnet, dass** die Mittel (4) zur Eingabe von Daten Mittel (12) umfassen, die es erlauben, Daten automatisch zu liefern.

3. System nach einem der Ansprüche 1 und 2,
**dadurch gekennzeichnet, dass** die Mittel (4) zur Eingabe von Daten Mittel (13) umfassen, die es einem Bediener erlauben, Daten einzugeben.

4. System nach einem der Ansprüche 1 bis 3,
**dadurch gekennzeichnet, dass** die Benutzermittel (11) Anzeigemittel umfassen, die den optimalen Zuordnungsplan auf einem Bildschirm anzeigen.

5. System nach den Ansprüchen 3 und 4,
**dadurch gekennzeichnet, dass** die Anzeigemittel und die Mittel (13), die es einem Bediener erlauben, Daten einzugeben, zu einer Mensch-/Maschinenschnittstelle gehören.

6. System nach einem der vorstehenden Ansprüche,
**dadurch gekennzeichnet, dass** das erste Element (6) dazu ausgelegt ist, eine Interpolation ausgehend von Leistungspunkten derart umzusetzen, dass eine probabilisierte und kontinuierliche Modellierung des Raums von Lösungen erhalten wird.

7. System nach einem der vorstehenden Ansprüche,
**dadurch gekennzeichnet, dass** das zweite Element (8) dazu ausgelegt ist, eine Optimierung durch Teilchenwolke zu realisieren.

8. System nach einem der vorstehenden Ansprüche,
**dadurch gekennzeichnet, dass** die erste Einheit (12) mindestens ein Radar (16) umfasst, das der Vorrichtung (1) Informationen über die Luftlage der Umgebung einer Zone, die das System (15) schützen soll, überträgt.

9. System nach einem der vorstehenden Ansprüche,
**dadurch gekennzeichnet, dass** es außerdem eine Mensch-/Maschinenschnittstelle umfasst, die es einem Bediener erlaubt, eine Genehmigung auszuführen.

10. System nach einem der vorstehenden Ansprüche,
**dadurch gekennzeichnet, dass** es außerdem Anzeigemittel umfasst, die den Einsatzvorschlag, der von der dritten Einheit (17) genehmigt ist, anzeigen.

11. Verfahren zur Verarbeitung von Bedrohungen aus der Luft in dem Militärbereich, das eine Zuordnung von Flugkörpern umfasst, um die Bedrohungen aus der Luft zu bearbeiten, wobei das Verfahren die folgenden aufeinanderfolgenden Schritte umsetzt:
α) Rückgewinnen von Informationen über die Luftlage der Umgebung einer zu schützenden Zone, indem Bedrohungen aus der Luft erfasst werden, und indem Positions- und Kinematikinformationen der Bedrohungen aus der Luft übertragen werden;
β) Verarbeiten dieser Informationen, um daraus einen Einsatzvorschlag abzuleiten, indem zunächst Abschussfenster der Flugkörper ausgehend von den Informationen bestimmt werden, dann der Einsatzvorschlag ausgehend von diesen Abschussfenstern abgeleitet wird, wobei der Einsatzvorschlag ein optimaler Zuordnungsplan der Flugkörper ist, wobei der Einsatzplan die Zuordnung der Flugkörper und die Abschusszeitpunkte der Flugkörper präzisiert, um die Bedrohungen aus der Luft zu verarbeiten; und
γ) Vorsehen eines Genehmigungsschritts des Einsatzvorschlags, wobei der Einsatz gemäß einem bei diesem Schritt γ) genehmigten Einsatzvorschlag ausgeführt wird,
wobei der Einsatzvorschlag bei Schritt β) bestimmt wird, indem ein Optimierungsverfahren eines Zuordnungsplans von Flugkörpern umgesetzt wird, gemäß dem auf automatische Weise die folgenden Schritte umgesetzt werden:
A/ Erzeugen von Daten und Bestimmen ausgehend von den erzeugten Daten der Verfügbarkeits- und Effizienzzeitfenster im Zusammenhang mit den Ressourcen; und
B/ mit Hilfe dieser Zeitfenster, Bestimmen des optimalen Zuordnungsplans der Ressourcen,
wobei die folgenden aufeinanderfolgenden Vorgänge bei Schritt B/ umgesetzt werden:
a) Probabilisieren eines Raums von Lösungen, nämlich der Zeitfenster, indem kontinuierliche Funktionen in Abhängigkeit von der Zeit, die diese Zeitfenster einhalten, erzeugt werden; und
b) Optimieren des Zuordnungsplans ausgehend von dem Raum der derart probabilisierten Lösungen.

## Claims

1. System for handling airborne threats in the military field, comprising an assignment of missiles for handling the airborne threats, said system (15) comprising:
- a first unit (12) for retrieving information relating to the air picture of the environment of an area to be protected by said system (15), said first unit (12) detecting airborne threats and transmitting position and kinematics information of the airborne threats;
- a second unit (1) for processing said information to deduce an engagement proposition therefrom, by firstly determining firing windows of the missiles on the basis of said information and then deducing the engagement proposition on the basis of said firing windows, said engagement proposition being an optimal missiles allocation plan, said engagement proposition specifying the missiles assignment and the firing instants of the missiles for handling the airborne threats; and
- a third unit (17) for implementing a step of approving the engagement proposition, the engagement being carried out in accordance with an engagement proposition approved by said third unit (17),
said second unit (1) including an automatic device for optimising a missiles allocation plan, comprising:
• means (4) for inputting data;
• first means (2) for determining, on the basis of the input data, time windows of availability and effectiveness relating to said missiles;
• second means (5) for determining, using said time windows, the optimal missiles allocation plan; and
• user means (11) using the optimal allocation plan determined by said second means (5),
said second means (5) comprising:
- a first element (6) configured to probabilise a solution space, namely said time windows, by generating continuous functions as a function of time that comply with said time windows; and
- a second element (8) configured to optimise the allocation plan on the basis of said solution space thus probabilised.

2. System according to claim 1,
**characterised in that** said means (4) for inputting data comprise means (12) for allowing data to be automatically supplied.

3. System according to either claim 1 or claim 2,
**characterised in that** said means (4) for inputting data comprise means (13) for allowing an operator to input data.

4. System according to any of claims 1 to 3,
**characterised in that** the user means (11) comprise display means that display the optimal allocation plan on a screen.

5. System according to claims 3 and 4,
**characterised in that** the display means and the means (13) for allowing an operator to input data are part of a human-machine interface.

6. System according to any of the preceding claims,
**characterised in that** said first element (6) is configured to implement an interpolation on the basis of performance points so as to obtain a continuous probability model of said solution space.

7. System according to any of the preceding claims,
**characterised in that** said second element (8) is configured to carry out a particle swarm optimisation.

8. System according to any of the preceding claims,
**characterised in that** said first unit (12) comprises at least one radar unit (16) that transmits information to said device (1) relating to the air picture of the environment of an area to be protected by said system (15).

9. System according to any of the preceding claims,
**characterised in that** it further comprises a human-machine interface allowing an operator to complete an approval.

10. System according to any of the preceding claims,
**characterised in that** it further comprises display means that display the engagement proposition approved by said third unit (17).

11. Method for handling airborne threats in the military field, comprising an assignment of missiles for handling the airborne threats, said method implementing the following successive steps:
α) retrieving information relating to the air picture of the environment of an area to be protected, by detecting airborne threats and transmitting position and kinematics information of the airborne threats;
β) processing said information to deduce an engagement proposition therefrom, by firstly determining firing windows of the missiles on the basis of said information and then deducing the engagement proposition on the basis of said firing windows, said engagement proposition being an optimal missiles allocation plan, said engagement proposition specifying the missiles assignment and the firing instants of the missiles for handling the airborne threats; and
γ) providing a step of approving the engagement proposition, the engagement being carried out according to an engagement proposition approved during this step γ),
the engagement proposition being determined during step β) by implementing a method for optimising a missiles allocation plan, wherein the following steps are automatically implemented:
A/ generating data and determining, on the basis of the generated data, time windows of availability and effectiveness relating to said resources; and
B/ determining, using said time windows, an optimal resources allocation plan during step B), the following successive operations being implemented:
a) determining the probability of a solution space, namely said time windows, by generating continuous functions as a function of time that comply with said time windows; and
b) optimising the allocation plan on the basis of the solution space thus probabilised.
